Europäisches Patentamt

European Patent Office

Office européen des brevets

(19)

(11) Veröffentlichungsnummer: **0 092 028**
**A2**

(12) **EUROPÄISCHE PATENTANMELDUNG**

(21) Anmeldenummer: **83101179.6**

(22) Anmeldetag: **08.02.83**

(51) Int. Cl.³: **C 01 F 7/02,** C 01 F 7/06

(30) Priorität: **20.04.82 DE 3214422**

(43) Veröffentlichungstag der Anmeldung: **26.10.83**
Patentblatt 83/43

(84) Benannte Vertragsstaaten: **DE FR IT**

(71) Anmelder: **Alcoa Chemie GmbH, Giulinistrasse 2,
D-6700 Ludwigshafen (DE)**

(72) Erfinder: **Pohland, Horst, Dr., Dipl.-Chem.,
Schwetzinger-Strasse 39, D-6703 Limburgerhof/Pfalz
(DE)**
Erfinder: **Hecht, Ernst, Goethestrasse 21,
D-6701 Waldsee/Pfalz (DE)**
Erfinder: **Bayer, Gerhard, deceased (DE)**

(74) Vertreter: **Benatzky, Erika, Dr.,
Giulinistrasse 2 Postfach 150550,
D-6700 Ludwigshafen/Rh. (DE)**

(54) **Verfahren zur Gewinnung von Feuerfest-Rohstoffen bei gleichzeitiger Entfernung von organischen Substanzen aus Kreislauflaugen des Bayer-Verfahrens.**

(57) Verfahren zur Gewinnung von Feuerfest-Rohstoffen bei gleichzeitiger Entfernung von organischen Substanzen aus Kreislauflaugen des Bayer-Verfahrens durch Umsetzung mit reaktivem Magnesiumoxid und/oder Magnesiumhydroxid.

EP 0 092 028 A2

Verfahren zur Gewinnung von Feuerfest-Rohstoffen bei gleichzeitiger Entfernung von organischen Substanzen aus Kreislauflaugen des Bayer-Verfahrens.

Gegenstand der vorliegenden Erfindung ist die Gewinnung von
Feuerfest-Rohstoffen auf naßchemischem Wege aus Kreislauflaugen des Bayer-Verfahrens unter gleichzeitiger Entfernung
der organischen Substanzen aus diesen Laugen.

Die Herstellung von hochfeuerfesten Massen auf naßchemischem
Wege ist bekannt. So wird beispielsweise in der DE-PS 825 976
vorgeschlagen, wasserlösliche Magnesiumverbindungen mit
wasserlöslichen Aluminaten in der Weise umzusetzen, daß
Magnesiumaluminatmassen entstehen, in denen der MgO-Gehalt
größer als der $Al_2O_3$-Gehalt ist. Magnesiumaluminatmassen
der Zusammensetzung 4 MgO . $Al_2O_3$ werden dabei als besonders
vorteilhaft bezeichnet. Der Scharfbrand dieser Massen erfolgt
nach einer Zwischenerhitzung bei Temperaturen von etwa 1950°C.

Gemäß der DE-PS 27 21 574 werden Magnesiumspinelle durch
Umsetzung von gelöstem Magnesiumsulfat mit äquimolaren Mengen
von Natriumaluminatlösung aus dem Bayer-Prozeß in Gegenwart
von Schwefelsäure erzeugt. Das ausgefällte Magnesiumaluminat
kann nach Abtrennung und Auswaschen zwar bereits durch Erhitzung auf Temperaturen von 900 bis 1100°C in einen stöchiometrischen Magnesiumspinell übergeführt werden, jedoch ist
auch dieses Verfahren bis heute großtechnisch nicht realisiert
worden. Ein Grund hierfür wird vor allem in den hohen Herstellungskosten gesehen, bedingt durch aufwendig zu gewinnende
Vorprodukte oder gleichzeitig anfallende weitere Nebenprodukte.

Überraschenderweise hat sich nunmehr herausgestellt, daß die
bekannten Verfahren zur Herstellung von Magnesiumaluminatmasse,

**⊠ALCOA**

aus Natriumaluminatlaugen des Bayer-Verfahrens erheblich verbessert werden können, und zwar nicht nur hinsichtlich der Gewinnung hochfeuerfester Massen. Wie sich nämlich gezeigt hat, werden bei dem neuen Verfahren gleichzeitig die organischen Substanzen aus der Kreislauflauge des Bayer-Verfahrens entfernt, so daß eine Verfärbung des daraus gewonnenen Aluminiumhydroxids bzw. Aluminiumoxids vermieden wird.

Das Verfahren gemäß der Erfindung ist dadurch gekennzeichnet, daß die Natriumaluminatlauge nach Entfernung des Rotschlammes unter Rühren mit reaktivem Magnesiumoxid und/oder reaktivem Magnesiumhydroxid versetzt wird und die nach Umsetzung bei Temperaturen von 40 bis 300°C gebildete Magnesium-Aluminium-Verbindung mit einem Molverhältnis $MgO : Al_2O_3$ von 2 : 1 bis 52 : 1 abgetrennt und bei einer Temperatur von mindestens 900°C gebrannt wird. Die reaktive Magnesiumverbindung kann sowohl in die Gutlauge, also unmittelbar nach Abtrennung des Rotschlammes, als auch in die Dünnlauge eingebracht werden. In Abhängigkeit von der Konzentration der Natriumaluminatlauge, der Temperatur, der Verweilzeit und der Reaktivität der Magnesiumverbindungen entstehen Verbindungen mit unterschiedlichem MgO-Gehalt. Verbindungen mit 3 bis 18 $MgO/Al_2O_3$ sind besonders leicht herstellbar und als Adsorbens wirksam.

Die nach dem Brennen vorliegenden Feuerfest-Rohstoffe sind entweder Periklas-Spinell-(Magnesiumaluminate)-Gemische oder Magnesiumaluminate allein. Die Temperatur liegt beim Brennen etwa zwischen 950 und 1250°C. Unter reaktivem Magnesiumoxid oder reaktivem Magnesiumhydroxid werden Verbindungen verstanden, die imstande sind, mit Natriumaluminatlösung zu reagieren. Derartige Verbindungen liegen z.B. vor, wenn MgO durch Brennen bei niedrigen Temperaturen erzeugt worden ist oder $Mg(OH)_2$ ein Fällungsprodukt ist.

Aus der DE-OS 25 18 431 ist zwar bereits bekannt, daß
schädliche organische Verbindungen aus der Aluminatlauge
mit einer wasserlöslichen Magnesiumverbindung unter Ausfällung von Magnesiumhydroxid und Aluminiumhydroxid aus
der Lauge entfernt werden können, jedoch konnte daraus nicht
ohne erfinderisches Zutun der Schluß gezogen werden, daß
dies auch mit wasserunslöslichem MgO und/oder $Mg(OH)_2$ unter
gleichzeitiger Bildung von Feuerfest-Rohstoffen möglich ist.
Gegenüber dem Verfahren dieser Patentschrift bringt das
neue Verfahren einen erheblichen technischen Fortschritt.

Anhand der nachstehenden 4 Beispiele wird der Erfindungsgegenstand noch näher erläutert.

## Beispiel 1

Auf 1 l Gutlauge (149 g $Na_2O$/l und 157 g $Al_2O_3$/l) wurden
20 g eines reaktiven Magnesiumoxids in Pulverform zugesetzt.
Das Gemisch der Aluminatlauge wurde dabei 60 Minuten bei
105°C im offenen Gefäß bei gleichbleibender Konzentration
gerührt. Anschließend wurde der sich bildende Niederschlag
filtriert und zeigte dabei folgende Analyse:

| | | |
|---|---|---|
| $MgO$ | 31 | Gew. % |
| $Al_2O_3$ | 26 | Gew. % |
| $Na_2O$ | 0,05 | Gew. % |
| $Fe_2O_3$ | 0,06 | Gew. % |
| Glühverlust | 42,5 | Gew. % |
| Gesamtmenge | 49 | g/l. |

ALCOA

Die in der Gutlauge (Ausgangslauge) befindliche schädliche, färbende organische Substanz wurde kalorimetrisch über einen Natriumhuminat-Standard mit 0,15 g/l ermittelt. Sie reduzierte sich nach dem Ausrührprozeß auf 0,08 g/l. Gleichzeitig sank in der Lauge der Eisengehalt von 0,01 mg/l auf 0,0075 mg/l.

Beim Glühen des Rückstands entsteht ein Gemisch aus Periklas. und Magnesiumaluminat (Spinell) mit einem MgO-Gehalt von 54,1 % und einem $Al_2O_3$-Gehalt von 45,9 %. Diese prozentuale Zusammensetzung entspricht einer Mol-Zusammensetzung von 3 MgO x $Al_2O_3$.

## Beispiel 2

1 l Gutlauge (150 g $Na_2O/l$ und 156 g $Al_2O_3/l$) mit einer Temperatur von 90°C wurde mit 10 g reaktivem Magnesiumhydroxid versetzt und eine Stunde lang bei gleichbleibender Konzentration gerührt. Der hierbei anfallende Niederschlag hatte folgende analytische Zusammensetzung:

|  |  |
|---|---|
| MgO | 63 Gew. % |
| $Al_2O_3$ | 3,1 Gew. %. |

Der Natriumhuminatwert der organischen Substanz erniedrigte sich von 159 mg/l auf 70 mg/l.

Nach dem Glühen des abgefilterten Rückstandes ( 11 g ) entstand eine Verbindung entsprechend dem Mol-Verhältnis von 52 MgO x $Al_2O_3$.

⊠ALCOA

Beispiel 3

1 l Dünnlauge ( 150 g $Na_2O$/l und 90 g $Al_2O_3$/l ) mit einer
Temperatur von 50°C wurde mit 10 g MgO eine Stunde bei
gleichbleibender Konzentration gerührt. Der hierbei anfallende Niederschlag hatte folgende analytische Zusammensetzung:

| | | |
|---|---|---|
| MgO | 40 | Gew. % |
| $Al_2O_3$ | 15,7 | Gew. % |
| Glühverlust | 36,2 | Gew. %. |

Der Natriumhuminatwert der organischen Substanz erniedrigte
sich von 124 mg/l auf 60 mg/l.

Nach dem Glühen des abgefilterten Rückstandes ( 19 g )
entstand eine Verbindung mit 64 % MgO und 25 % $Al_2O_3$.
Diese Verbindung entspricht dem Mol-Verhältnis von 6,5 MgO
x $Al_2O_3$.

Beispiel 4

Einem Liter Gutlauge wurden 20 g einer reaktiven Magnesiumoxid-Komponente zugesetzt und 30 Minuten bei 220°C in
einem Rollautoklaven einer Druckbehandlung unterzogen. Nach
der Entspannung wurde der Rückstand filtriert, gewaschen und
getrocknet. Er bestand analytisch aus:

| | | |
|---|---|---|
| MgO | 57,15 | Gew. % |
| $Al_2O_3$ | 8 | Gew. % |
| Glühverlust | 32,9 | Gew. %. |

ⒷALCOA

Der Natriumhuminatwert der organischen Säure wurde von
145 mg/l auf 21 mg/l gesenkt.

Nach dem Glühen des gewaschenen Rückstandes entstand ein
Produkt mit einem Gehalt von

$$MgO \qquad 86,9 \quad Gew. \%$$
$$Al_2O_3 \qquad 13 \qquad Gew. \%.$$

Dieses Produkt entsprach einem Anteil von 18 Mol MgO und
1 Mol $Al_2O_3$. Auch hier liegt röntgenographisch neben
Periklas Spinell als Phasenanteil vor.

Patentansprüche

1. Verfahren zur Gewinnung von Feuerfest-Rohstoffen auf
naßchemischem Wege aus Kreislauflaugen des Bayer-Verfahrens
unter gleichzeitiger Entfernung der organischen Substanzen
aus diesen Laugen, dadurch gekennzeichnet, daß die Natriumaluminatlauge nach Entfernung des Rotschlammes unter Rühren
mit reaktivem Magnesiumoxid und/oder reaktivem Magnesiumhydroxid
versetzt wird und die nach Umsetzung bei Temperaturen von 20 bis
300°C, insbesondere 40 bis 105°C, gebildete Magnesium-Aluminium-Verbindung mit einem Molverhältnis
      $MgO : Al_2O_3$ von 2 : 1 bis 52 : 1
abgetrennt und bei einer Temperatur von mindestens 900°C
gebrannt wird.

2. Verfahren nach Anspruch 1, dadurch gekennzeichnet, daß eine
Magnesium-Aluminium-Verbindung mit einem Molverhältnis
      $MgO : Al_2O_3$ von 3 : 1 bis 18 : 1
ausgefällt wird.

3. Verfahren nach den Ansprüchen 1 und 2, dadurch gekennzeichnet,
daß die Magnesium-Aluminium-Verbindung aus der Gutlauge
gefällt wird.

4. Verfahren nach den Ansprüchen 1 und 2, dadurch gekennzeichnet,
daß die Magnesium-Aluminium-Verbindung aus der Dünnlauge
gefällt wird.

5. Verfahren nach den Ansprüchen 1 bis 4, dadurch gekennzeichnet,
daß die ausgefällte Magnesium-Aluminium-Verbindung nach
Abtrennung und Waschen bei Temperaturen von 950°C bis 1250°C
gebrannt wird.

⬛ALCOA